# EUROPEAN PATENT APPLICATION

(11) **EP 4 011 996 A1**
(43) Date of publication of application: **15.06.2022**
(21) Application number: 20213625.5
(22) Date of filing: 11.12.2020
(51) Int. Cl.: C09J 5/02, C09J 5/06

(54) **METHOD FOR DETACHING ADHESIVELY BONDED SUBSTRATES**

(71) Applicant: Henkel AG & Co. KGaA, 40589 Düsseldorf (DE); Henkel IP & Holding GmbH, 40589 Düsseldorf (DE)
(72) Inventor: Franken, Uwe, 41542 Dormagen (DE); Burns, Barry, County Dublin, A96 A4P0 (IE); Ferencz, Andreas, 40223 Düsseldorf (DE)

(57) **Abstract**

The present invention is directed to a method for detaching two substrates bonded by an adhesive, in particular by treating with a debonding agent. In addition, the present invention relates to the use of the method in recycling parts of the electronic devices. The method comprises the steps of: (1) treating two substrates bonded by an adhesive with a debonding agent comprising acetone and/or oleic acid at a temperature from 20°C to 90°C, and (2) removing the substrates from the adhesive.

## Description

The present invention is directed to a method for detaching substrates bonded with adhesive, in particular by treating with a debonding agent. In addition, the present invention relates to the use of the method in recycling parts of the electronic devices.

Bonding parts by adhesives has found applications in various areas such as aeronautics, aerospace, electronics, automotive, construction, sports and packaging. Adhesives can be used to bind various materials such as metals, polymers, ceramics, cork, rubbers, etc. However, one of the drawbacks of adhesive bonding is its "permanence" character as the bonds are not easy to detach. In most cases, the bonds cannot be detached without destroying the substrates.

Nowadays, the widely used advanced materials i.e. ceramics, precious metals, composite materials etc. are usually expensive and thus create an increasing demand for recyclability, driven by economic and environmental reasons. Thus, the development of new technologies and processes for easy recycling and repairing adhesively bonded assemblies are becoming of great interest for the industry. If the adhesive bonds can be broken without damage of the parts, recycling will be much easier. In addition, from an environmentally friendly point of view, it is necessary to separate the bonds between the bonded substrates so that the different materials can be reused on a qualitatively high level.

As recycling becomes a necessary and global issue, reversible adhesives or debonding on command of the adhesive bonds have been developed.

For example, WO 01/30932 describes a process for the adhesive separation of adhesive bonds. The adhesive bond comprises a heat-softenable thermoplastic adhesive layer or a heat-cleavable thermoset adhesive layer and a primer layer, the primary layer containing nanoscale particles which can be heated by electromagnetic alternating fields.

WO-A 01/28771 describes a microwave-curable composition containing particles capable of absorbing microwaves with a Curie temperature which is higher than the curing temperature of the composition.

US 20160068720 A1 discloses a debondable adhesive composition comprising (A) the hydrosilation reaction product of the reaction between the vinyl groups on 1,3,5,7-tetravinyl-1,3,5,7-tetramethylcyclotetrasiloxane and the terminal Si-H hydrogens on a silane or siloxane having terminal Si-H hydrogens, (B) a crosslinker for the hydrosilation reaction product, and (C) a metal catalyst and/or radical initiator. The debondable adhesive composition maintains its adhesion at temperatures of 300°C or greater, and is mechanically debondable at room temperature at a force less than 5N/25 mm.

However, if used in high demanding applications such as electronic devices which require excellent adhesion portfolio in bonding strength, impact resistance and application easiness, the methods in prior art have drawbacks of increased cost of the adhesives, insufficient bonding strength and/or impact resistance. In addition, the prior art methods using special heating equipment also increase the cost and energy. In view of the existing problems in providing an alternative and/or improved method for detaching an adhesively bonded substrates, there is still need in the art for methods of detaching adhesively bonded substrates which is suitable for the application in industrial scale and obviate the need for cost-intensive treatments.

The present invention meets this need by providing, in a first aspect, a method for detaching substrates bonded by an adhesive, comprising the steps of:
(1) treating two substrates bonded by an adhesive with a debonding agent comprising acetone and/or oleic acid at a temperature from 20°C to 90°C, and
(2) removing the substrates from the adhesive.

In another aspect, the present invention relates to the use of the method as described herein in recycling the parts of electronic devices.

All percentages given herein in relation to the compositions or formulations relate to % by weight (wt%) relative to the total weight of the respective composition or formulation, if not explicitly stated otherwise.

The present invention is based on the inventor's surprising finding that by using a debonding agent comprising acetone and/or oleic acid to treat adhesively bonded substrates at a temperature from 20°C to 90°C, the detachment of the substrates from the adhesive can be well achieved.

As the first step, the method for detaching substrates bonded by an adhesive comprises the step of treating two substrates bonded by an adhesive with a debonding agent comprising acetone and/or oleic acid at a temperature from 20°C to 90°C.

As used herein, the term "treating" means that the debonding agent contacts at least the interface between the substrate(s) and the adhesive by conventional methods, such as immersing, brushing, spraying, etc. In one preferred embodiment, the two substrates bonded by an adhesive are immersed in the debonding agent.

In one embodiment, the duration of the treatment of substrate(s) by the debonding agent is from 0.5 minute to 60 minutes, and preferably from 1 minute to 30 minutes.

The debonding agent comprises acetone and/or oleic acid, may further comprises at least one additive selected from water, an alkanolamine, a non-ionic surfactant, and combination thereof.

Acetone may be present in the debonding agent in an amount of at least 50% by weight, preferably at least 95%, more preferably at least 99%, and in particular at least 99.5% based on the weight of the debonding agent.

Oleic acid may be present in the debonding agent in an amount of 1% to 50% by weight, preferably from 5% to 30% by weight based on the weight of the debonding agent.

If present, the debonding agent may contain water, preferably deionized water in an amount of 0.01 to 50% by weight, preferably 0.1 to 40% by weight based on the weight of the debonding agent.

Examples of alkanolamines used as additive in the debonding agent are ethanolamine, diethanolamine, triethanolamine, propanolamine, dipropanolamine, and tripropanolamine. In one preferred embodiment, the alkanolamine is triethanolamine.

If present, the debonding agent may contain at least one alkanolamine, in an amount of 1 to 50% by weight, preferably 5 to 40% by weight based on the weight of the debonding agent.

The non-ionic surfactants preferably include alkoxylated, advantageously ethoxylated and/or propoxylated, particularly primary alcohols having preferably 8 to 22 carbon atoms, particularly 8 to 18 carbon atoms, and an average of 1 to 20, preferably 1 to 12 moles alkylene oxide, particularly preferably 5 to 15 moles alkylene oxide, advantageously ethylene oxide (EO), per mole alcohol, in which the alcohol group can be linear or preferably methyl-branched in the 2-position or can comprise linear and methyl branched groups in the mixture, as typically occur in oxo-alcohol groups. Particularly preferred are, however, alcohol ethoxylates with linear groups from alcohols with 8 to 18 carbon atoms, e.g., from isodecyl, or isotridecyl alcohol, and an average of 2 to 8 EO or 5 to 15 EO per mole alcohol. Exemplary preferred ethoxylated alcohols include C₁₀₋₁₄-alcohols with 3 EO or 4 EO, C₉₋₁₄-alcohols with 7 EO, C₁₃₋₁₅-alcohols with 3 EO, 5 EO, 7 EO or 8 EO, C₁₂₋₁₈-alcohols with 3 EO, 5 EO or 7 EO and mixtures thereof, as well as mixtures of C₁₂₋₁₄-alcohols with 3 EO and C₁₂₋₁₈-alcohols with 5 EO. The cited degrees of ethoxylation constitute statistically average values that can be a whole or a fractional number for a specific product. Preferred alcohol ethoxylates have a narrowed homolog distribution (narrow range ethoxylates, NRE).

In addition, substances commonly known to the person skilled in the art as non-ionic emulsifiers can also be considered as non-ionic surfactants. In this context, the non-ionic surfactants comprise, e.g., a polyol group, a polyether group, a polyamine group or a polyamide group or a combination of the above groups as the hydrophilic group. Such compounds are, for example, addition products of C₈-C₂₂-alkyl- mono- and -oligo glycosides and their ethoxylated analogs, addition products of 2 to 30 moles ethylene oxide and/or 0 to 10, particularly 0 to 5 moles propylene oxide to fatty alcohols with 8 to 22 carbon atoms, to fatty acids with 12 to 22 carbon atoms, and to alkyl phenols with 8 to 15 carbon atoms in the alkyl group, C₁₂-C₂₂-fatty acid mono- and diesters of addition products of 1 to 30 moles ethylene oxide on glycerin as well as addition products of 5 to 60 moles ethylene oxide on castor oil and on hydrogenated castor oil.

Weakly foaming non-ionic surfactants that possess alternating ethylene oxide and alkylene oxide units can also be employed. Among these, the surfactants with EO-AO-EO-AO blocks are again preferred, wherein one to ten EO or AO groups respectively are linked together, before a block of the other groups follows. Examples of these are surfactants of the general formula 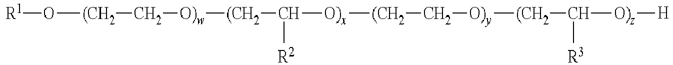 in which R¹ stands for a linear or branched, saturated or mono- or polyunsaturated C₆₋₂₄-alkyl or alkenyl group, each group R² or R³ independently of one another is selected from -CH₃, -CH₂CH₃, -CH₂CH₂₋CH₃, -CH(CH₃)₂, and the indices w, x, y, z independently of one another stand for whole numbers from 1 to 6. They can be manufactured by known methods from the corresponding alcohols R¹-OH and ethylene- or alkylene oxide. The group R¹ in the previous formula can vary depending on the origin of the alcohol. When natural sources are used, the group R¹ has an even number of carbon atoms and generally is not branched, the linear alcohols of natural origin with 12 to 18 carbon atoms, for example coconut, palm, tallow or oleyl alcohol, being preferred. The alcohols available from synthetic sources are, for example, Guerbet alcohols or mixtures of methyl branched in the 2-position or linear and methyl branched groups, as are typically present in oxo alcohols. Independently of the type of alcohol employed for the manufacture of the non-ionic surfactants comprised in the agents, inventive agents are preferred, wherein R¹ in the previous formula stands for an alkyl radical with 6 to 24, preferably 8 to 20, particularly preferably 9 to 15 and particularly 9 to 11 carbon atoms. In addition to propylene oxide, especially butylene oxide can be the alkylene oxide unit that alternates with the ethylene oxide unit in the non-ionic surfactants. However, other alkylene oxides are also suitable, in which R² or R³ independently of one another are selected from -CH₂CH₂CH₃ or -CH(CH₃)₂.

In addition, non-ionic block copolymers are considered as non-ionic surfactants, such as, for example, those described in U.S. Pat. No. 6,677,293, incorporated herein by reference in its entirety. Here, for example, they can concern AB-, AA'B-, ABB'-, ABA'- or BAB'-block copolymers, wherein A and A' stand for a hydrophilic block and B and B' for a hydrophobic block. The blocks A and A', independently of one another can be a polyalkylene oxide, particularly a polypropylene oxide or polyethylene oxide, polyvinyl pyridine, polyvinyl alcohol, polymethyl vinyl ether, polyvinyl pyrrolidine or a polysaccharide. The blocks B and B', independently of one another, can be for example an optionally substituted alkyl group that can be obtained for example by polymerizing units selected from the group consisting of 1,3-butadiene, isoprene, all isomers of dimethylbutadiene, 1,3-pentadiene, 2,4-hexadiene, α-methylstyrene, isobutylene, ethylene, propylene or styrene or mixtures thereof. The molecular weights of the blocks A, A', B and B' are preferably, independently of one another, between 500 and 50,000 g/mole. According to the invention, at least one of the blocks A and A' is preferably an alkylene oxide.

Another class of preferred non-ionic surfactants which may be used, either as the sole non-ionic surfactant or in combination with other non-ionic surfactants are alkoxylated, preferably ethoxylated or ethoxylated and propoxylated fatty acid alkyl esters preferably containing 1 to 4 carbon atoms in the alkyl chain, in particular fatty acid methyl esters.

Furthermore, as additional non-ionic surfactants, alkyl glycosides that satisfy the general Formula RO(G)ₓcan also be added, where R means a primary linear or methyl-branched, particularly 2-methyl-branched, aliphatic group containing 8 to 22 and preferably 12 to 18 carbon atoms and G stands for a glycose unit containing 5 or 6 carbon atoms, preferably glucose. The degree of oligomerization x, which defines the distribution of monoglycosides and oligoglycosides, is any number between 1 and 10, preferably between 1.2 and 1.4.

Non-ionic surfactants of the amine oxide type, for example N-cocoalkyl-N,N-dimethylamine oxide and N-tallow alkyl-N,N-dihydroxyethylamine oxide, and the fatty acid alkanolamides, may also be suitable.

Other suitable surfactants are polyhydroxyfatty acid amides corresponding to the following formula, 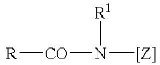 in which RCO stands for an aliphatic acyl group with 6 to 22 carbon atoms, R¹ for hydrogen, an alkyl or hydroxyalkyl group with 1 to 4 carbon atoms and [Z] for a linear or branched polyhydroxyalkyl group with 3 to 10 carbon atoms and 3 to 10 hydroxy groups. The polyhydroxyfatty acid amides are known substances, which may normally be obtained by reductive amination of a reducing sugar with ammonia, an alkylamine or an alkanolamine and subsequent acylation with a fatty acid, a fatty acid alkyl ester or a fatty acid chloride.

The group of polyhydroxyfatty acid amides also includes compounds corresponding to the formula, 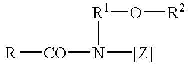 in which R is a linear or branched alkyl or alkenyl group containing 7 to 12 carbon atoms, R¹ is a linear, branched or cyclic alkyl group or an aryl group containing 2 to 8 carbon atoms and R² is a linear, branched or cyclic alkyl group or an aryl group or an oxyalkyl group containing 1 to 8 carbon atoms, C₁₋₄ alkyl or phenyl groups being preferred, and [Z] is a linear polyhydroxyalkyl group, of which the alkyl chain is substituted by at least two hydroxy groups, or alkoxylated, preferably ethoxylated or propoxylated derivatives of that group.

[Z] is preferably obtained by reductive amination of a reduced sugar, for example glucose, fructose, maltose, lactose, galactose, mannose or xylose. The N-alkoxy- or N-aryloxy-substituted compounds may then be converted into the required polyhydroxyfatty acid amides by reaction with fatty acid methyl esters in the presence of an alkoxide as catalyst.

Further usable non-ionic surfactants are the end capped poly(oxyalkylated) surfactants of the formula

R¹O[CH₂CH(R³)O]ₓ[CH₂]ₖCH(OH)[CH₂]ⱼOR²

in which R¹ and R² stand for linear or branched, saturated or unsaturated, aliphatic or aromatic hydrocarbon groups with 1 to 30 carbon atoms, R³ stands for H or for a methyl, ethyl, n-propyl, isopropyl, n-butyl, 2-butyl or 2-methyl-2-butyl group, x stands for values between 1 and 30, k and j for values between 1 and 12, preferably 1 to 5. Each R³ in the above formula can be different for the case where x≧2. R¹ and R² are preferably linear or branched, saturated or unsaturated, aliphatic or aromatic hydrocarbon groups containing 6 to 22 carbon atoms, groups containing 8 to 18 carbon atoms being particularly preferred. H, -CH₃ or -CH₂CH₃ are particularly preferred for the radical R³. Particularly preferred values for x are in the range from 1 to 20 and more particularly in the range from 6 to 15.

In a particularly preferred embodiment, the non-ionic surfactants are addition products of alkylene oxide units, particularly ethylene oxide (EO) and/or propylene oxide (PO) units on alkylphenols, wherein the alkyl group of the alkylphenol contains between 6 and 18 carbon atoms, particularly preferably between 6 and 12 carbon atoms, principally 8, 9 or 10 carbon atoms and wherein preferably between 1 and 18 ethylene oxide (EO) units, particularly preferably between 5 and 15 EO units, principally 8, 9 or 10 EO units are added to the alkylphenol group, wherein the cited values are average values and wherein the alkyl group of the alkylphenol can be linear or methyl branched in the 2-position or can comprise linear and methyl branched groups in the mixture, as are typically present in oxoalcohol groups. In a particularly preferred embodiment, the non-ionic surfactant is an addition product of an average of 9 EO units on nonylphenol, wherein the alkyl group and the polyethylene group are preferably positioned meta to one another. A product of this type can be obtained, for example, under the name DISPONIL NP9 (BASF, Germany).

In a further particularly preferred embodiment, the non-ionic surfactant is an addition product of ethylene oxide (EO) units on a fatty alcohol, wherein the fatty alcohol preferably contains between 10 and 22 carbon atoms, particularly preferably between 14 and 20 carbon atoms, principally between 16 and 18 carbon atoms and wherein preferably between 4 and 24 ethylene oxide (EO) units, particularly preferably between 10 and 22 EO units, principally 11, 12, 13, 19, 20 or 21 EO units are added to the fatty alcohol. Particularly preferred products that consist of a C₁₆₋₁₈-alcohol with 12 or 20 EO units are, for example, obtainable under the trade name EUMULGIN B1 or EUMULGIN B2 (BASF, Germany).

In a further particularly preferred embodiment, the non-ionic surfactant is an addition product of ethylene oxide (EO) units on a fatty alcohol, wherein the fatty alcohol preferably contains between 8 and 22 carbon atoms, particularly preferably between 10 and 20 carbon atoms, principally between 12 and 18 carbon atoms and wherein preferably between 3 and 15 ethylene oxide (EO) units, particularly preferably between 5 and 11 EO units, principally 6, 7, 8, 9 or 10 EO units are added to the fatty alcohol. Particularly preferred products that consist of a C₁₂₋₁₈-alcohol with 7 or 9 EO units are, for example, obtainable under the trade name DEHYDOL LT7 and DEHYDOL 100 (BASF, Germany).

In a further particularly preferred embodiment, the non-ionic surfactant is an addition product of ethylene oxide (EO) units on a fatty alcohol, wherein the fatty alcohol preferably contains between 18 and 26 carbon atoms, particularly preferably between 20 and 24 carbon atoms, principally 22 carbon atoms and wherein preferably between 6 and 16 ethylene oxide (EO) units, particularly preferably between 8 and 12 EO units, principally 9, 10 or 11 EO units are added to the fatty alcohol. A particularly preferred product that consists of a C₂₂-alcohol with 10 EO units is, for example, obtainable under the trade name MERGITAL B10 (BASF, Germany).

In a further particularly preferred embodiment, the non-ionic surfactant is an addition product of ethylene oxide (EO) units and propylene oxide units on a fatty alcohol, wherein the fatty alcohol preferably contains between 6 and 18 carbon atoms, particularly preferably between 10 and 16 carbon atoms, principally between 10 and 12 or between 12 and 14 carbon atoms and wherein preferably between 1 and 10, particularly preferably between 3 and 7, principally 4, 5 or 6 EO units as well as preferably between 1 and 10, particularly preferably between 2 and 6, principally 3, 4, 5 or 6 PO units are added to the fatty alcohol. In a preferred embodiment, the non-ionic surfactant herein is a block copolymer, in which preferably the EO units are added to the fatty alcohol and the PO units follow on the EO units and wherein the alkyl group of the fatty alcohol can be linear or methyl-branched in the 2-position or may contain linear and methyl-branched radicals in the form of the mixtures typically present in oxoalcohol groups. A particularly preferred product that consists of a C₁₂-C₁₄-alcohol with 5 EO units and 4 PO units is, for example, obtainable under the name DEHYPPON LS 54 (BASF, Germany). A further particularly preferred product that consists of a C₁₀₋₁₂-alcohol with 5 EO units and 5 PO units is, for example, obtainable under the name BIODAC 2/32 (Sasol, Germany).

In a further inventively preferred embodiment, the non-ionic surfactant is a fluorinated or fluorine-containing non-ionic surfactant. Here, particularly preferably it is an addition product of alkylene oxide units; particularly ethylene oxide (EO) units and/or propylene oxide units on an alkyl alcohol, wherein the alkyl alcohol preferably contains between 4 and 20 carbon atoms, particularly preferably between 6 and 18 carbon atoms, and wherein preferably between 1 and 18, particularly preferably between 2 and 16 EO units are added to the alkyl alcohol and wherein the compound, preferably the alkyl group, comprises at least one fluorine atom, preferably at least 5 fluorine atoms, especially between 5 and 30 fluorine atoms. In a particularly preferred embodiment, the compound or mixture of compounds is one with the formula F(CF₂)₁₋₇CH₂CH₂O(CH₂CH₂O)₁₋₁₅H. Such a non-ionic surfactant is obtainable for example under the name ZONYL FSO 100 (Dupont, France).

According to the invention, in a particular embodiment, the hydroxyl groups of the abovementioned non-ionic surfactants that carry hydroxyl groups can be partially or completely etherified or esterified. In this regard, there is especially an ether bond to a C₁₋₆ alkyl group, preferably to a methyl, ethyl isopropyl or tert.-butyl group. Preferred ester bonds include those to a C₁₋₆ alkane carboxylic acid, especially to acetic acid or maleic acid.

If present, the debonding agent may contain at least one non-ionic surfactant, in an amount of 1% to 50% by weight, preferably 5% to 40% by weight based on the weight of the debonding agent.

In one embodiment, the debonding agent comprises or consists of acetone and water. Preferably, the debonding agent comprises or consists of at least 90%, preferably at least 99% of acetone and no more than 10%, preferably no more than 1% of water, based on the weight of the debonding agent.

In another embodiment, the debonding agent comprises or consists of oleic acid and water. Preferably, the debonding agent comprises or consists of at least 80%, preferably at least 90% of oleic acid and no more than 20%, preferably no more than 10% of water, based on the weight of the debonding agent.

In yet another embodiment, the debonding agent comprises or consists of oleic acid, water, an alkanolamine, and a non-ionic surfactant. Preferably, the debonding agent comprises or consists of 1% to 50% by weight, preferably from 5% to 30% by weight of oleic acid, 1% to 50% by weight, preferably from 5% to 30% by weight of at least one alkanolamine, and 1% to 50% by weight, preferably from 5% to 40% by weight of at least one non-ionic surfactant, based on the weight of the debonding agent.

No particular limitations are put on the method of preparing the debonding agent of the present invention, in which the essential components and the optional components are added in any order. In a preferred method of preparation, for instance, the essential components are added to an aqueous solvent, then may be followed by the optional components, and the resultant mixture is agitated at a normal temperature.

The method of the present invention is implemented by bringing the debonding agent as described above into contact with at least one substrate bonded by an adhesive. The surface of the substrate(s) and adhesive with which the debonding agent is to be brought into contact is optionally to be cleaned, so that oil, soil, metal powder (occurring due to abrasion or upon forming), and so forth can be removed. Therefore, the method according to the present invention may comprise a step of cleaning the substrates and adhesive before step (1). Cleaning may be carried out in any way, and industrially common cleaning methods including alkali cleaning are available. The substrate and adhesive as cleaned is washed with water to rinse alkaline components and so forth out of the surface thereof, and then the debonding agent of the present invention is brought into contact with the surface.

The treatment of the debonding agent is preferably carried out at a temperature of 20 to 90°C, and preferably 20 to 70°C. In case a debonding agent comprising oleic acid is used, it is more preferred to treat the substrates under a temperature of 30 to 70°C, in particular 40 to 60°C. While dependent on the properties of the substrate material or a base material for substrate, the time for the treatment is generally 3 to 120 minutes, and preferably 5 to 60 min.

Depending on the structure and complexity of the substrates, the debonding agent may be applied to the bonded substrates by immersion, spraying and/or brushing.

There is no limitation to the adhesive to be detached from the substrate(s). Such adhesives can be thermoplastic or thermoset adhesive. Preferably, the adhesive to be detached from the substrate(s) is selected from the group consisting of epoxy resins, acrylates, and polyurethanes.

The substrates can be the same or different, and each substrate is selected from the group consisting of metals, polymers, glass, ceramics, cork, and rubbers.

In addition, the method for detaching substrates bonded by an adhesive further comprise a step of (2) removing the substrates from the adhesive.

The removement of the substrates from the adhesive may or may not use external force. For example, the external force may not be necessary when after step (1), the adhesive has been completely separated from the substrate or even dissolved in the debonding agent. However, if at least part of the adhesive is still contacted with any substrate, external force may be used to completely delaminate or remove the adhesive. The external force applied by such as liquid washing or mechanical force is used to compensate for the remaining bonding strength between the adhesive and any substrate.

In one embodiment, the tensile shear strength of the bonded substrates after step (1) is no more than 5 MPa, preferably no more than 4 MPa, measured by ASTM-D1002. In one preferred embodiment, the tensile shear strength of the bonded substrates made of steel after step (1) is no more than 1 MPa, preferably no more than 0.5 MPa, measured by ASTM-D1002. In another preferred embodiment, the tensile shear strength of the bonded substrates made of polycarbonate after step (1) is no more than 3 MPa, preferably no more than 2 MPa, measured by ASTM-D1002. In yet another preferred embodiment, the tensile shear strength of the bonded substrates made of glass after step (1) is no more than 1 MPa, preferably no more than 0.5 MPa, measured by ASTM-D1002.

After step (2), i.e. the adhesive was removed from the substrate, the method according to the present invention may comprise a step of cleaning the substrates and adhesive. Cleaning may be carried out in any way, and industrially common cleaning methods including alkali cleaning are available. The substrate and adhesive as cleaned is washed with water to rinse the debonding agent out of the surface thereof.

The method for detaching the adhesively bonded substrates according to the present invention is suitable for recycling the parts of electronic devices such as mobile phones bonded by various conventional adhesives such as epoxy, acrylate and polyurethane adhesives and can be implemented in an industrial scale.

It is of course understood that all embodiments disclosed above in connection with the methods of the invention are similarly applicable to the laminates and uses of the invention and vice versa.

The invention is further illustrated by the following examples, without being limited thereto. Therein, the indicated amounts are by weight, unless otherwise indicated.

### Examples

### Example 1 (according to the invention)

Samples were prepared by bonding two substrates, 100 mm x 25 mm at room temperature, with commercial adhesives according to Table 1. The thickness of each substrate was 1.6 mm, the bondline was 0.25 mm, and the bonding area was 25 x 12.5 mm overlap. Then each sample was immersed in a 5% aqueous solution of oleic acid used as the debonding agent at 60°C for 30 minutes. After washing the debonding agent by water, substrates and adhesives were separated by an Instron tester and the tensile shear strength (TSS) was tested according to ASTM-D1002 at 23°C and 50% humidity. The reduction ratio of the TSS compared to the values in the reference example was calculated. The test results are shown in Table 1.

### Example 2 (according to the invention)

Samples were prepared by bonding two substrates with commercial adhesives according to Table 1. The thickness of each substrate was 1.6 mm, the bondline was 0.25 mm, and the bonding area was 25 x 12.5 mm overlap. Then each sample was immersed in acetone (99.7% purity) used as the debonding agent at 30°C for 30 minutes. After washing the debonding agent by water, substrates and adhesives were separated by an Instron tester and the tensile shear strength was tested according to ASTM-D1002 at 23°C and 50% humidity. The reduction ratio of the TSS compared to the values in the reference example was calculated. The test results are shown in Table 1.

### Example 3 (according to the invention)

Samples were prepared by bonding two substrates with commercial adhesives according to Table 1. The thickness of each substrate was 1.6 mm, the bondline was 0.25 mm, and the bonding area was 25 x 12.5 mm overlap. Then each sample was immersed in an aqueous solution containing 1.24% triethanolamine, 0.6% oleic acid, 1.5% ethoxylated isodecanol and 0.4% ethoxylated isotridecanol used as the debonding agent at 60°C for 30 minutes. After washing the debonding agent by water, the substrates and adhesives were separated by an Instron tester and the tensile shear strength was tested according to ASTM-D1002 at 23°C and 50% humidity. The reduction ratio of the TSS compared to the values in the reference example was calculated. The test results are shown in Table 1.

### Example 4 (comparative example)

Samples were prepared by bonding two substrates with commercial adhesives according to Table 1. The thickness of each substrate was 1.6 mm, the bondline was 0.25 mm, and the bonding area was 25 x 12.5 mm overlap. Then each sample was immersed in diethylene glycol (99.5% purity) used as the debonding agent at 60°C for 30 minutes. After washing the debonding agent by water, the substrates and adhesives were separated by an Instron tester and the tensile shear strength was tested according to ASTM-D1002 at 23°C and 50% humidity. The test results are shown in Table 1.

### Reference Example

Samples were prepared by bonding two substrates with commercial adhesives according to Table 1. The thickness of each substrate was 1.6 mm, the bondline was 0.25 mm, and the bonding area was 25 x 12.5 mm overlap. The samples were not treated by debonding agent, but the substrates and adhesives were separated by an Instron tester and the tensile shear strength was tested according to ASTM-D1002 at 23°C and 50% humidity. The test results are shown in Table 1.

**Table 1**

| Substrate/Adhesive | HHDD 3542¹ | | HHDD 6010² | | HHD 8540³ | |
|---|---|---|---|---|---|---|
| | TSS (in MPa) | Reduction (%) | TSS (in MPa) | Reduction (%) | TSS (in MPa) | Reduction (%) |
| Reference | | | | | | |
| Polycarbonate | 20 | - | 12 | - | 9.5 | - |
| Stainless steel | 5 | - | 6 | - | 22 | - |
| Ink coated glass | 4 | - | 4 | - | 4 | - |

| Example 1 | | | | | | |
|---|---|---|---|---|---|---|
| Stainless steel | 0.5 | 90 | 1.1 | 82 | 1.3 | 94 |

| Example 2 | | | | | | |
|---|---|---|---|---|---|---|
| Polycarbonate | 1.9 | 91 | 1.3 | 89 | 1.1 | 88 |
| Stainless steel | 0.25 | 95 | 0.6 | 90 | 2.2 | 90 |
| Ink coated glass | 0.4 | 90 | 0.7 | 81 | 0.24 | 94 |

| Example 3 | | | | | | |
|---|---|---|---|---|---|---|
| Polycarbonate | 1.9 | 90.5 | 1.8 | 85 | 2.7 | 72 |
| Stainless steel | <0.02 | 99 | 0.8 | 86.7 | 4 | 82 |
| Ink coated glass | 0.4 | 90 | 0.6 | 85 | 0.8 | 79.0 |

| Example 4 | | | | | | |
|---|---|---|---|---|---|---|
| Polycarbonate | 18 | 10 | 11.1 | 8 | 9.2 | 3 |
| Stainless steel | 4.75 | 5 | 6 | 0 | 22.4 | 2 |
| Ink coated glass | 3.16 | 21 | 3.9 | 2 | 3.7 | 8 |

| | | | | | | |
|---|---|---|---|---|---|---|
| ¹ HHDD 3542 is a polyurethane hot melt adhesive obtained from Henkel. ² HHDD 6010 is a two-part polyurethane adhesive obtained from Henkel. ³ HHDD 8540 is an acrylate adhesive obtained from Henkel. | | | | | | |

As can be seen from Table 1, after treating by the debonding agent according to the present invention, the bonded substrates made of various materials could be easily removed from various types of adhesives as the bonding strength was significantly reduced. However, diethylene glycol used in the comparative example could not efficiently separate the bonded substrates in similar conditions.

## Claims

1. A method for detaching substrates bonded by an adhesive, comprising the steps of:
(1) treating two substrates bonded by an adhesive with a debonding agent comprising acetone and/or oleic acid at a temperature from 20°C to 90°C, and
(2) removing the substrates from the adhesive.

2. The method according to claim 1, wherein the debonding agent further comprises at least one additive selected from water, an alkanolamine, a non-ionic surfactant, and combination thereof.

3. The method according to claim 1 or 2, wherein the debonding agent comprises at least 95%, preferably at least 99% of acetone based on the weight of the debonding agent.

4. The method according to any of claim 1 or 3, wherein the debonding agent comprises oleic acid, water, an alkanolamine, and a non-ionic surfactant.

5. The method according to any one of claims 1 to 4, wherein the method further comprises a step of cleaning the substrates before step (1) and/or after step (2).

6. The method according to any one of claims 1 to 5, wherein the treating temperature in step (1) is from 20°C to 70°C.

7. The method according to any one of claims 1 to 6, wherein the adhesive is selected from the group consisting of epoxy resins, acrylates, and polyurethanes.

8. The method according to any one of claims 1 to 7, wherein the substrates are each independently selected from the group consisting of metals, glass, polymers, ceramics, cork, and rubbers.

9. Use of the method according to any one of claims 1 to 8 in recycling the parts of electronic devices, preferably mobile phones.
